# FASCICULE DE BREVET EUROPEEN

(11) **EP 0 576 762 B1**
(45) Date de publication et mention de la délivrance du brevet: **21.02.1996**
(21) Numéro de dépôt: 92420222.9
(22) Date de dépôt: 30.06.1992
(51) Int. Cl.: G01F 11/02, G01F 15/00, G01F 25/00, F16K 7/06

(54) **Dispositif pour délivrer une quantité déterminée de liquide**
Gerät zum Abgeben einer definierten Flüssigkeitsmenge
Device for delivering a predetermined quantity of liquid

(43) Date de publication de la demande: 05.01.1994
(73) Titulaire: S.P.C. FRANCE, F-69140 Rillieux La Pape (FR)
(72) Inventeur: Tessier, Marc, F-69140 Rillieux la Pape (FR)
(74) Mandataire: Laurent, Michel

(56) Documents cités:
- EP-A- 0 290 048
- DE-A- 2 918 669
- DE-A- 3 510 110
- FR-A- 2 676 117
- GB-A- 1 597 955

## Description

L'invention concerne un dispositif perfectionné, apte à délivrer une quantité déterminée et dosée de liquide, et ce de manière répétitive.

De plus en plus fréquemment, l'Industrie se heurte à des difficultés dès lors qu'il s'agit de procéder au dosage de manière répétitive, à des cadences relativement élevée, d'une très faible quantité de liquide. Ceci est notamment le cas dans l'industrie pharmaceutique, mais également cosmétique et à un degré moindre, dans l'agro-alimentaire.

On a proposé, depuis quelque temps déjà le principe d'un dosage au moyen d'un piston à course alternative possédant sur sa périphérie une rainure de distribution longitudinale et coulissant dans un cylindre creux. Les cotes de ces éléments atteignent un degré de précision tel, que l'on peut s'affranchir de l'utilisation de tout joint d'étanchéité. L'ascension du piston dans le cylindre, provoque l'aspiration du liquide à doser à partir d'une canalisation débouchant dans le corps du cylindre. En bout de course ascensionnelle, le piston subit une rotation d'un angle déterminé, par exemple de 180°, afin de faire correspondre sa rainure avec une autre canalisation, débouchant également dans le corps du cylindre, et située en position diamètralement opposée à la canalisation d'admission. La course du piston dans le sens opposé induit l'éjection du liquide hors de la rainure périphérique du piston dans cette canalisation de délivrance ou d'éjection. En bout de course, le piston subit à nouveau une nouvelle rotation d'un angle de 180 ° et le cycle décrit recommence.

Ce type de dispositif, satisfaisant au niveau dosage, se heurte aux inconvénients suivants.

Tout d'abord, la présence d'une impureté au niveau de la rainure peut induire un blocage voire une usure prématurée du cylindre. En outre, comme déjà précisé, ce type de dispositif de dosage est couramment utilisé dans l'industrie pharmaceutique ou dans les laboratoires d'analyses médicales. Il est donc soumis à des conditions d'hygiène et de stérilité sévères, de sorte que l'on recherche des éléments facilement décontaminables, et corrélativement de contamination difficile. Or, la présence d'une rainure ainsi que des canalisations Admission + Echappement, induisent une contamination relativement rapide du piston et corrélativement une décontamination rendue plus difficile en milieu stérile, du fait de l'existence d'angles, de recoins et d'intersections.

On a également proposé un dispositif de dosage analogue, dans lequel le piston n'est pas muni d'une rigole ou rainure périphérique, mais comporte à l'une de ses extrémités un tiroir. Celui-ci, changeant de position corrélativement avec celle du piston dans le cylindre, sélectionnera successivement la voie Admission ou Echappement. Ce dispositif implique les mêmes inconvénients que dans les cas précédents, notamment au niveau du blocage, de l'usure, mais également au niveau des difficultés de décontamination.

En outre, ces deux types de dispositif ne maîtrisent pas de manière satisfaisante et répétitive l'égouttement en fin de chaque cycle de dosage. Ce défaut de maîtrise induit des conséquences dommageables notamment, lorsque le réceptacle dans lequel le liquide doit être introduit, est scellé par soudage. Le dépôt d'une ou plusieurs gouttes au niveau de la zone de soudage empêche la réalisation d'une soudure étanche et régulière, rendant ainsi le produit final obtenu impropre notamment à la conservation et par voie de conséquence à sa commercialisation.

Un autre dispositif de dosage du type comprenant un corps creux et un piston qui est déplacé dans ce corps, est connu de la demande EP-A-0 290 048. Des vannes de pincement ont déjà été utilisées dans des appareils de dosage- voir, par example, DE-A-2 918 669, GB-A-1 597 955.

L'invention vise un dispositif du type en question, permettant de s'affranchir des problèmes liés au travail en milieu stérile et hygiénique. En outre, elle vise un dispositif perfectionné dans lequel on maîtrise parfaitement les problèmes d'égouttement en fin d'éjection.

Ce dispositif, pour délivrer une quantité déterminée de liquide comprend un corps creux et un piston cylindriques animés d'un mouvement relatif alternatif l'un par rapport à l'autre, et une canalisation de délivrance ou d'éjection,
- le corps creux définissant une chambre de dosage au niveau duquel débouche une canalisation d'admission ou d'échappement du liquide à doser ;
- le piston cylindrique, dont le diamètre externe correspond au jeu près au diamètre interne de la chambre de dosage, percé sur toute sa longueur d'un canal destiné à permettre le transfert du liquide de la chambre de dosage vers le lieu de délivrance de celui-ci sous l'action de son déplacement relatif par rapport au corps creux.

Selon l'invention, les canalisations d'amenée et de délivrance ou d'éjection du liquide à doser, réalisées par un tuyau en matière souple, sont pourvues chacune d'une vanne d'obturation, constituée par :
- deux jeux de plaques, actionnés simultanément, les deux plaques de chacun des jeux étant disposées de part et d'autre de la canalisation correspondante,
- et d'un doigt également actionné, situé entre les deux jeux de plaques, comportant deux éléments complémentaires situés de part et d'autre de la canalisation,
lesdites plaques pincant légèrement la canalisation en amont et en aval du doigt lorsque la vanne est en position ouverte, le doigt étant alors en position escamoté, et les plaques s'écartant de la canalisation lorsque la vanne est en position fermée, l'obturation de la canalisation étant alors obtenue par fermeture du doigt sur la dite canalisation provoquant un pincement.

En d'autres termes et comme il sera mieux compris à la lumière de la description qui va suivre, l'invention consiste à s'affranchir de tout mouvement de rotation du piston dans le corps du cylindre, dont le fonctionnement induit des effets inverses par rapport aux dispositifs piston-cylindre traditionnels. En effet, l'aspiration et l'éjection du liquide à doser ne résultent plus que du simple mouvement alternatif du piston dans le corps du cylindre. En outre, ce système de vanne agissant de manière antagoniste au niveau des canalisations permet de maitriser de manière tout à fait satisfaisante l'égouttement en fin de chaque cycle de dosage, ce que les dispositifs connus à ce jour ne permettaient pas d'obtenir de manière simple et efficace.

Selon une forme de réalisation particulièrement avantageuse de l'invention, les canalisations d'admission et d'échappement ménagées aux extrémités du piston et du cylindre, sont constituées d'un tuyau en matière souple, par exemple du silicone. Elles sont pourvues chacune d'une vanne d'obturation et de compensation volumique. La matière des tuyaux pourra varier en fonction des produits dosés, la seule contrainte étant l'absence de rémanence aux déformations.

Selon une forme particulièrement avantageuse de l'invention, le liquide délivré dans un récipient approprié peut être pesé, analysé, contrôlé sur site, les mesures effectuées étant corrélées avec la course du piston en fonction des données préalablement introduites dans une unité centrale de commande. La vitesse d'action du piston peut être modulée en cours de fonctionnement de façon à effectuer une variation continue pendant l'opération de dosage elle-même.

La manière dont l'invention est réalisée et les avantages qui en découlent ressortiront mieux de l'exemple de réalisation qui suit donné à titre indicatif et non limitatif à l'appui des figures annéxées.

La figure 1 est une représentation schématique du dispositif conforme à l'invention, selon la configuration piston fixe/cylindre mobile.

La figure 2 est une représentation en perspective sommaire d'un détail du dispositif conforme à l'invention, selon la configuration piston mobile/cylindre fixe.

La figure 3 est une coupe transversale d'une vanne conforme à l'invention en position ouverte.

La figure 4 est une représentation schématique analogue à la figure 3, ladite vanne étant en position fermée.

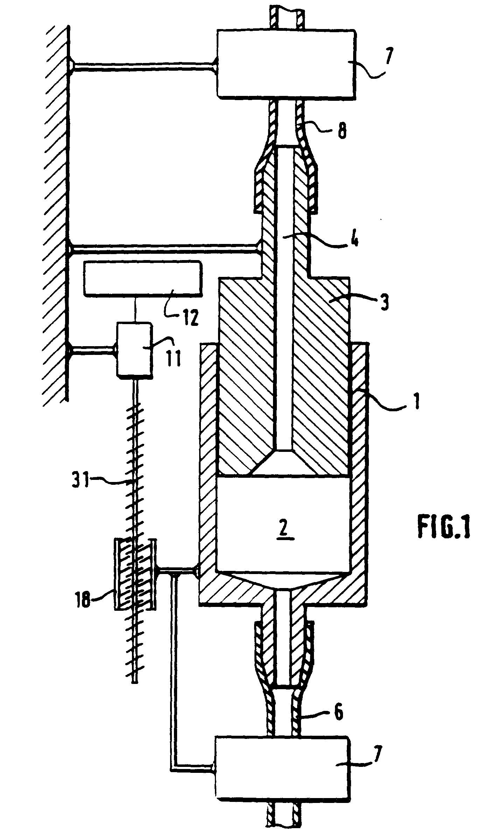

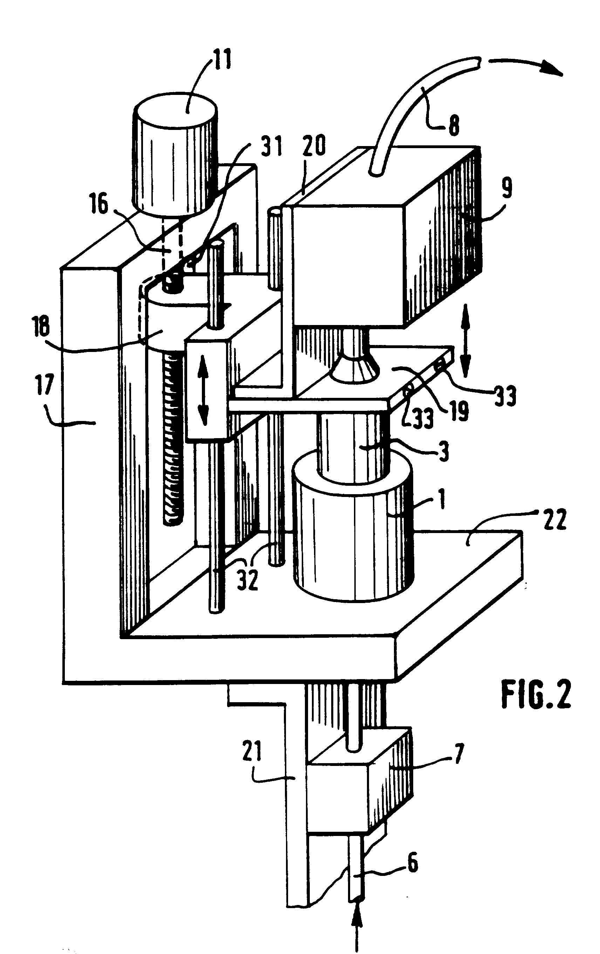

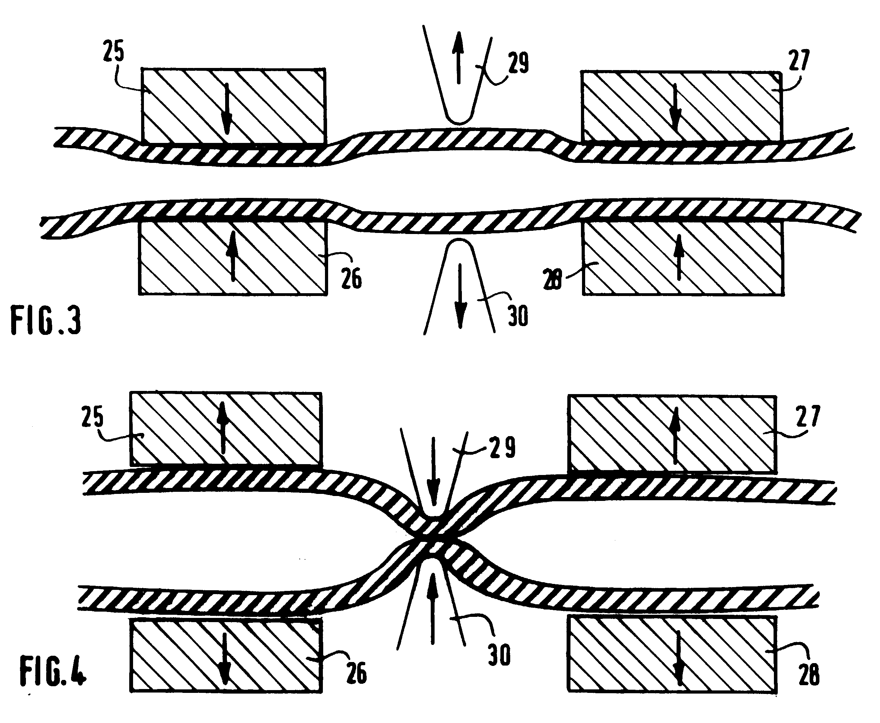

Selon l'invention, et comme on l'a représenté sur la figure 1, le dispositif comprend fondamentalement un cylindre (1), perçé en son centre d'un orifice cylindrique. Ce cylindre est destiné à recevoir un piston (3), de forme cylindrique, dont l'étanchéité sera garantie soit par la présence de joints, segments ou tout autre accessoire permettant d'aboutir à ce résultat, soit par la réalisation d'un jeu réduit de un à cinquante micro-mètres, garantissant l'absence de fuite en fonction des liquides manipulés.

Les canalisations d'admission et d'échappement sont constituées d'un tuyau souple d'un diamètre approprié, associées à deux vannes de pincement à compensation volumique (7), dont l'architecture et le fonctionnement sera décrit en détail ultérieurement.

Le piston (3) ou le cylindre (1) est animé d'un mouvement alternatif généré par le biais d'un moteur ou tout autre système translatif à position contrôlée, à savoir par exemple :
. courroie crantée avec ou sans codeur de position;
. vérin électrique, pneumatique, hydraulique avec ou sans codeur de position ;
. bielle manivelle avec ou sans codeur de position;
. vis/écrou avec ou sans codeur de position.

La gestion de ces éléments s'effectue à l'aide de toute motorisation et énergie : pas à pas, courant continu (avec ou sans collecteur) hydraulique régulé, pneumatique régulé. La course du piston ou du cylindre est bien entendu contrôlée de manière très précise, puisque, comme il sera décrit ultérieurement, c'est elle qui conditionne la quantité du liquide à doser.

Selon une caractéristique fondamentale de l'invention, le piston (3) est également percé selon son axe de révolution d'un canal (4) débouchant de fait à ses deux extrémités. L'une d'elle, prolongée par un tuyau souple, comme pour la canalisation d'admission, est également munie d'une vanne à pincement et à compensation volumique, décrite ci-après.

Ce type de dispositif de dosage est destiné à être monté sur toute installation nécessitant la gestion volumique d'un élément, et le contrôle du processus en cours, selon une boucle ouverte ou fermée. L'ensemble peut suivre une cadence élevée, et permettre l'association de tous les éléments de suivi, gérés électroniquement, tels que : balance, analyse de composition, nature spectrographique, viscosité, débit, couleur, densité, etc ..., dont les mesures sont stockées puis analysées au niveau d'une unité centrale de commande (12), typiquement constituée par un micro-ordinateur. Selon les informations introduites dans sa mémoire en fonction des fourchettes autorisées par l'utilisateur, le déplacement du piston pourra être modifié en vitesse ou en course par l'intermédiaire de l'organe de commande (11) choisi, celui-ci étant soumis aux injonctions de ladite unité centrale de commande.

On a représenté schématiquement sur la figure 2 un mode de réalisation possible de l'actionnement du piston conformément à l'invention. Afin de faciliter la représentation schématique, la canalisation d'amenée (6) se fait par la base du cylindre (1) et la canalisation d'évacuation (échappement) (8) est située vers le haut. Néanmoins, le principe de fonctionnement est indépendant des choix : élément fixe/élément mobile, admission inférieure/supérieure et corrélativement échappement inférieur/supérieur.

Le moteur (11) sur injonction de l'unité centrale de commande actionne le mouvement alternatif du piston (3) par le biais de la vis (31) et de l'écrou (18).

Sur la figure 1, les deux vannes respectivement d'admission et d'éjection (7) sont fixées par tout moyen mécanique traditionnel, respectivement sur l'exemple : admission sur partie mobile - support piston, et échappement sur bâti.

Les vannes dites "à pincement et à compensation volumique" sont analogues et sont respectivement constituées de deux jeux de plaques respectivement (25,26) et (27,28), actionnées chacune au moyen d'une came ou de tout autre moyen mécanique (non représenté), les plaques de chacun des jeux étant disposée de part et d'autre de la canalisation correspondante, soit d'admission soit d'éjection. En position ouverte, ces plaques compriment légèrement le tuyau souple, sans toutefois l'obturer.

Corrélativement, les deux jeux respectivement (25, 26) et (27,28) sont disposés de part et d'autre d'un doigt d'obturation constitué par deux éléments (29 et 30) également situés de part et d'autre du tuyau souple et sont actionnés mécaniquement. Lorsque la vanne est en position ouverte, le doigt est lui-même ouvert de sorte que l'admission ou l'éjection peut intervenir (Figure 3).

En revanche, en position obturée, chacune des plaques de chacun des jeux s'écarte et corrélativement, les deux éléments (29 et 30) du doigt se rapprochent jusqu'à obturer totalement le tuyau de silicone (Figure 4). De la sorte, la partie du tuyau située en amont du doigt présente une légère augmentation de volume, propre à contenir le liquide, déplacé par le pincement du doigt. De la même manière, la partie du tuyau située en aval du doigt (29, 30) s'écarte également, provoquant l'égouttement, particulièrement intéressant au niveau de l'échappement.

Dans un autre mode de fonctionnement de ces vannes, on peut modifier le mouvement relatif des plaques (25-28) et des éléments (29,30) d'obturation, afin de générer lors de leur actionnement la création d'une ou de plusieurs gouttes au niveau de l'échappement, voire une micro-pulvérisation.

Il va être décrit plus en détail le fonctionnement du dispositif conformément à l'invention (cf. figure 1).

Lors de la première étape du fonctionnement, la vanne d'admission est ouverte, la vanne d'échappement est fermée, le piston (3) étant en position enfoncée dans le cylindre (1). Lors de la seconde étape, le cylindre, sous l'action du moteur (11), descend d'une course définie C, déterminée en fonction du volume à doser. Cette descente induit l'aspiration et donc l'admission du liquide à doser.

Après avoir fermée la vanne d'admission, et après avoir ouvert la vanne d'échappement, le cylindre remonte d'une même course C sous l'action du moteur (11), induisant par compression, la montée du liquide par le canal (4) situé selon l'axe de révolution du piston (3). Puis l'on recommence ce cycle de manière répétée.

La vanne d'échappement se ferme, supprimant par là même, la ou les fatidiques gouttes préjudiciables à l'aval, au traitement des produits.

On conçoit ainsi, que seule la course du piston provoque le transfert de liquide, celui-ci n'étant soumis à aucune rotation. En outre, compte-tenu de la présence des vannes à compensation volumique, on conçoit que lors de la fermeture, notamment de la vanne d'éjection, les gouttes résiduelles sont irrémédiablement aspirées, et qu'en revanche, lors de la fermeture de la vanne d'admission, il n'y a pas de risque d'introduction intempestive du liquide au niveau du corps (2) du cylindre (1). Par voie de conséquence, la précision des dosage est accrue.

En outre, tous les éléments de ce dispositif sont très facilement démontables, notamment le piston, maintenu au niveau du plateau de solidarisation (19) par exemple par de simples vis (33), ou par un clips, et ne présente aucun recoin ou angle, de sorte que sa stérilisation est rendue beaucoup plus aisée. Il en est de même pour le cylindre. Corrélativement, du fait même de l'absence de recoins, la contamination des élements constitutifs de ce système de dosage, en contact avec les matériaux "polluants", est rendue beaucoup plus difficile.

En outre, ce dispositif présente une grande souplesse d'utilisation, une plus grande fiabilité dans le dosage inhérent au fonctionnement très simple du piston, et en outre une étanchéité obtenue par la présence des vannes caractéristiques.

L'éventuel système de pesée en sortie augmente la précision, et la corrélation effectuée entre la pesée et le moteur permet de corriger quasiment instantanément la course du piston ou du cylindre pour définir le volume exact du liquide à doser.

La possibilité de faire varier en continu, avec une grande souplesse, sans aucune contrainte figée, le déplacement du piston ou du cylindre ainsi que la commande des vannes, présente de nombreuses applications notamment au niveau des laboratoires d'analyses, de l'industrie pharmaceutique, cosmétique, dans l'agro-alimentaire, et dans l'industrie chimique.

## Revendications

1. Dispositif pour délivrer une quantité déterminée de liquide comprenant un corps creux (1) et un piston (3) animés d'un mouvement relatif alternatif l'un par rapport à l'autre,
- le corps creux (1), définissant une chambre de dosage cylindrique (2), au niveau duquel débouche une canalisation d'amenée (6) du liquide à doser ;
- le piston (3) cylindrique, dont le diamètre externe correspond au jeu près au diamètre interne de la chambre de dosage (2), percé sur toute sa longueur d'un canal (4), destiné à permettre le transfert du liquide de la chambre de dosage (2) vers le lieu de délivrance de celui-ci sous l'action de son déplacement relatif par rapport au corps creux (1),
et comprenant en outre une canalisation de délivrance ou d'éjection (8),
caractérisé en ce que les canalisations d'amenée (6) et de délivrance ou d'éjection (8) du liquide à doser, réalisées par un tuyau en matière souple, sont pourvues chacune d'une vanne d'obturation (7,9), constituée par :
- deux jeux de plaques (25,26) et (27,28), actionnés simultanément, les deux plaques de chacun des jeux étant disposées de part et d'autre de la canalisation correspondante (6,8),
- et d'un doigt également actionné, situé entre les deux jeux de plaques (25,26) et (27,28), comportant deux éléments complémentaires (29,30) situés de part et d'autre de la canalisation (6,8),
lesdites plaques pincant légèrement la canalisation en amont et en aval du doigt lorsque la vanne est en position ouverte, le doigt étant alors en position escamoté, et les plaques s'écartant de la canalisation lorsque la vanne est en position fermée, l'obturation de la canalisation étant alors obtenue par fermeture du doigt sur la dite canalisation provoquant un pincement.

2. Dispositif selon la revendication 1, caractérisé en ce que les deux vannes (7,9) respectivement d'admission et de délivrance fonctionnent de manière antagoniste l'une par rapport à l'autre.

3. Dispositif selon l'une des revendications 1 et 2, caractérisé en ce que les canalisations d'amenée (6) et de délivrance ou d'éjection (8) du liquide à doser sont réalisées en silicone.

4. Dispositif selon l'une des revendications 1 à 3, caractérisé en ce que le canal (4) est situé selon l'axe de révolution du piston (3).

5. Dispositif selon l'une des revendications 1 à 4, caractérisé en ce que les canalisations d'admission ou d'échappement peuvent être indifféremment positionnées sur les extrémités du piston (3) ou du corps creux (1), et reliées à leur canal respectif.

6. Dispositif selon l'une des revendications 1 à 5, caractérisé en ce qu'il comprend en outre des organes de contrôle, destinés à mesurer des paramètres affectés au liquide dosé, notamment la masse dudit liquide, les mesures effectuées étant stockées et analysées au niveau d'une unité centrale de commande associée (12), induisant la variation de la course du piston (3) ou du corps creux (1), afin d'ajuster avec précision la quantité désirée de liquide délivré .

## Patentansprüche

1. Vorrichtung für die Abgabe einer bestimmten Menge einer Flüssigkeit, mit einem hohlen Bauteil (1) und einem Kolben (3), welche zu einer alternierenden Relativbewegung zueinander angetrieben werden, wobei
- das hohle Bauteil (1) eine zylindrische Dosierungskammer (2) bildet, in welche eine Zufuhrleitung (6) für die zu dosierende Flüssigkeit mündet,
- der zylindrische Kolben (3), dessen Außendurchmesser mit geringem Spiel dem Innendurchmesser der Dosierungskammer (2) entspricht, über seine gesamte Länge von einem Kanal (4) durchbohrt ist, der dazu bestimmt ist, den Durchtritt der Flüssigkeit aus der Dosierungskammer (2) in Richtung des Abgabeortes aufgrund der Relativbewegung zwischen Kolben (3) und hohlem Bauteil (1) zu ermöglichen,
und wobei die Vorrichtung weiterhin eine Abgabe- oder Ausstoßleitung (8) umfaßt,
**dadurch gekennzeichnet**, daß die Zufuhrleitung (6) und die Abgabe- oder Ausstoßleitung (8) für die zu dosierende Flüssigkeit aus einem Schlauch aus verformbarem Material bestehen und jeweils mit einem Absperrventil (7,9) versehen sind, welches besteht aus:
- zwei Plattenpaaren (25,26) und (27,28), die simultan angetrieben werden, wobei die Platten jedes der beiden Paare zu beiden Seiten der entsprechenden Leitung (6,8) angeordnet sind,
- und einem ebenfalls angetriebenen Drücker, der zwischen den beiden Plattenpaaren (25,26 und 27,28) angeordnet ist, und zwei komplementäre Elemente (29,30) umfaßt, welche zu beiden Seiten der Leitung (6,8) angeordnet sind,
wobei die Platten die Leitung stromaufwärts und stromabwärts des Drückers leicht zusammendrücken, wenn das Ventil in der geöffneten Position ist, wobei der Drücker gleichzeitig in zurückgezogener Position ist, und die Platten von der Leitung zurückgezogen sind, wenn das Ventil in der geschlossenen Position ist, wobei die Absperrung der Leitung durch Schließen des Drückers auf dieser Leitung, wodurch eine Einklemmung erzeugt wird, erfolgt.

2. Vorrichtung nach Anspruch 1, **dadurch gekennzeichnet**, daß die beiden Ventile, nämlich das Einlaßventil (7) und das Auslaßventil (9) zueinander entgegenwirkend betätigt werden.

3. Vorrichtung nach einem der Ansprüche 1 und 2, **dadurch gekennzeichnet**, daß die Zufuhrleitung (6) und die Abgabe- oder Ausstoßleitung (8) für die zu dosierende Flüssigkeit aus Silikon hergestellt sind.

4. Vorrichtung nach einem der Ansprüche 1 bis 3, **dadurch gekennzeichnet**, daß der Kanal (4) um die Rotationsachse des Kolbens (3) herum angeordnet ist.

5. Vorrichtung nach einem der Ansprüche 1 bis 4, **dadurch gekennzeichnet**, daß die Einlaßleitung oder Auslaßleitung sowohl am Ende des Kolbens (3) als auch des hohlen Bauteils (1) angeordnet und mit deren jeweiligem Kanal verbunden sein können.

6. Vorrichtung nach einem der Ansprüche 1 bis 5, **dadurch gekennzeichnet**, daß sie weiterhin Kontrollorgane umfaßt, welche dazu bestimmt sind, Parameter, welche der dosierten Flüssigkeit eigen sind, insbesondere die Masse dieser Flüssigkeit, zu messen, wobei die durchgeführten Messungen in einer angeschlossenen zentralen Steuerungseinheit (12) gespeichert und analysiert werden und eine Variation des Hubs des Kolbens (3) oder des hohlen Bauteils (1) bewirkt wird, um mit Präzision die gewünschte Menge der abgegebenen Flüssigkeit einzustellen.

## Claims

1. Device for delivering a specific quantity of liquid, comprising a hollow member (1) and a piston (3), brought into relative alternating movement with respect to one another,
- the hollow member (1) defining a cylindrical metering chamber (2) at the level of which there opens an admission conduit (6) for the liquid to be metered;
- the cylindrical piston (3), the external diameter of which corresponds, with a small degree of play, to the internal diameter of the metering chamber (2), transversed along its entire length by a channel (4) intended to enable transfer of the liquid from the metering chamber (2) towards the delivery point of the latter under the action of its relative displacement with respect to the hollow member (1), and comprising in addition a delivery or ejection conduit (8),
characterised in that the supply (6) and delivery or ejection conduits (8) for the liquid to be metered, provided in the form of a tube of flexible material, are each provided with a closure valve (7, 9)comprising:
- two sets of plates (25, 26) and (27, 28), activated simultaneously, the two plates of each of the sets being disposed on either side of the corresponding conduit (6, 8),
- and a pin, likewise activated, located between the two sets of plates (25, 26) and (27, 28), comprising two complementary members (29, 30) located on either side of the conduit (6, 8),
the said plates lightly clamping the conduit upstream and downstream of the pin when the valve is in the open position, the pin then being in a retracted position, and the plates moving away from the conduit when the valve is in the closed position, closure of the conduit being then obtained by closure of the pin on the said conduit, causing a clamping action.

2. Device according to Claim 1, characterised in that the two respective valves (7,9) for admission and delivery function in a manner opposed one with respect to the other.

3. Device according to one of Claims 1 and 2, characterised in that the supply (6) and delivery or ejection (8) conduits for the liquid to be metered are made of silicon.

4. Device according to one of Claims 1 to 3, characterised in that the channel (4) is located along the axis of revolution of the piston (3).

5. Device according to one of Claims 1 to 4, characterised in that the admission or outlet conduits may be optionally positioned on the ends of the piston (3) or of the hollow member (1), and connected to their respective channel.

6. Device according to one of Claims 1 to 5, characterised in that it comprises in addition monitoring units intended to measure parameters effected in the metered liquid, particularly the mass of the said liquid, the measurements carried out being stored and analysed at an associated central control unit (12) causing variation in the travel of the piston (3) or of the hollow member (1), in order to adjust with precision the desired quantity of liquid delivered.
